# EUROPEAN PATENT APPLICATION

(11) **EP 4 814 540 A2**
(43) Date of publication of application: **30.09.2026**
(21) Application number: 26166008.8
(22) Date of filing: 19.03.2026
(51) Int. Cl.: G01S 15/46, G01S 15/58, G01S 15/931, G01S 15/62, G01S 15/00

(54) **OBJECT DETECTION DEVICE AND PROGRAM**

(30) Priority: 26.03.2025 JP 2025051034
(71) Applicant: AISIN CORPORATION, Kariya, Aichi 448-8650 (JP)
(72) Inventor: SASSA, Koichi, Kariya, Aichi, 448-8650 (JP); SAKIUCHI, Takuya, Kariya, Aichi, 448-8650 (JP)
(74) Representative: TBK

(57) **Abstract**

An object detection device (200) includes: transmission and reception units (21A to 21L); and an arithmetic unit (301), the arithmetic unit (301) including: a triangulation arithmetic unit (314) configured to adopt, as detection data, a distance based on one or more reflected waves every time the one or more reflected waves are received, in a case where the reflected wave has predetermined reliability, set detection data of the reflected wave as reference detection data, perform triangulation on each of a plurality of pieces of the detection data included in a predetermined range (901) of the reference detection data, and calculate a plurality of coordinates based on the detection data up to an object (O); and a collision determination unit (316) configured to obtain a moving direction of the object (O), and determine whether a moving body (1) collides with the object (O) on the basis of the moving direction.

## Description

### TECHNICAL FIELD

The present disclosure relates to an object detection device and a program.

### BACKGROUND DISCUSSION

In an object detection device that detects an object such as an obstacle present around a vehicle using ultrasonic waves, a technology is used in which a plurality of transmission and reception units that transmit and receive ultrasonic waves are installed on a vehicle body, and a distance from the vehicle to the object is calculated on the basis of transmission and reception timings of ultrasonic waves in the respective transmission and reception units.

For example, WO 2023/276919 A discloses an automated braking control device that acquires traveling direction information representing a traveling direction of a vehicle, speed information related to the vehicle, and position information of an object based on a detection wave transmitted and received for detecting the object in the traveling direction, switches automated braking execution areas, that is, collision determination areas on the basis of the traveling direction information and the speed information, each of the automated braking execution areas being set in at least one of an inner area and an outer area with respect to a vehicle width line, the vehicle width line extending in the traveling direction in accordance with a vehicle width of the vehicle, and when the object is detected, determines whether to execute automated braking on the basis of the position information with respect to the automated braking execution area.

However, in such a conventional technology, since the area where collision determination is performed is limited by the speed information of the vehicle, there is a problem that an object with which the vehicle can avoid colliding and movement of the object are limited, and it is difficult to execute highly accurate collision determination.

A need thus exists for an object detection device and a program that can perform highly accurate collision determination.

### SUMMARY

An object detection device according to the present disclosure is an object detection device mounted on a moving body to detect an object present around the moving body, the object detection device including: a plurality of transmission and reception units configured to transmit and receive an ultrasonic wave; and an arithmetic unit configured to calculate an object distance, which is a distance from the moving body to the object, on the basis of transmission and reception timings of an ultrasonic wave in each of the plurality of transmission and reception units, wherein the arithmetic unit includes: a triangulation arithmetic unit configured to adopt, as detection data, a distance based on one or more reflected waves with respect to a transmission wave transmitted from any one of the plurality of transmission and reception units every time the one or more reflected waves are received, in a case where the reflected wave has predetermined reliability, set detection data of the reflected wave having the reliability as reference detection data, perform triangulation on each of a plurality of pieces of the detection data included in a predetermined range of the reference detection data, and calculate a plurality of coordinates based on the detection data up to the object; and a collision determination unit configured to obtain a moving direction of the object on the basis of the plurality of coordinates obtained every time the transmission wave is transmitted, and determine whether the moving body collides with the object on the basis of the moving direction.

The object detection device according to the present disclosure can perform highly accurate collision determination.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a diagram illustrating a configuration example of a vehicle according to a first embodiment;
Fig. 2 is a diagram illustrating a configuration example of a vehicle control system according to the first embodiment;
Fig. 3 is a diagram illustrating an example of a method of calculating a distance by TOF method in the first embodiment;
Fig. 4 is a diagram illustrating a functional configuration example of an object detection device according to the first embodiment;
Fig. 5 is a diagram illustrating an example of a first direct wave distance and a second direct wave distance according to the first embodiment;
Fig. 6 is a diagram illustrating an example of a first indirect wave distance and a second indirect wave distance according to the first embodiment;
Fig. 7 is a diagram illustrating an example of waveforms of a plurality of reflected waves with respect to a transmission wave according to the first embodiment;
Fig. 8 is a diagram illustrating an example of the waveforms of the reflected waves according to the first embodiment;
Fig. 9 is a diagram illustrating an example of a predetermined range of reference detection data in the waveforms of the reflected waves in the first embodiment;
Fig. 10 is a diagram illustrating an example of a centroid point in the first embodiment;
Fig. 11 is a diagram illustrating an example of triangulation points, centroid points, and a regression line in the first embodiment;
Fig. 12 is a diagram illustrating a method of calculating an obstacle distance in a case where a vehicle 1 collides with an obstacle in the first embodiment;
Fig. 13 is a diagram illustrating a method of calculating an obstacle distance in a case where the vehicle 1 does not collide with the obstacle in the first embodiment;
Fig. 14 is a flowchart illustrating an example of object detection processing according to the first embodiment;
Fig. 15 is a block diagram illustrating a functional configuration example of an object detection device according to a second embodiment;
Fig. 16 is a diagram illustrating an example of detection data according to the second embodiment;
Figs. 17A and 17B are diagrams illustrating an example of movement of a vehicle 1 and waveforms of reflected waves in the second embodiment;
Fig. 18 is a flowchart illustrating an example of object detection processing according to the second embodiment; and
Fig. 19 is a flowchart illustrating an example of the object detection processing (continuation) according to the second embodiment.

### DETAILED DESCRIPTION

Hereinafter, embodiments of the present disclosure will be described with reference to the drawings. Configurations of the embodiments described below and actions and effects brought about by the configurations are merely examples, and the present disclosure is not limited to the following description.

### [First Embodiment]

### (Configuration of Vehicle 1)

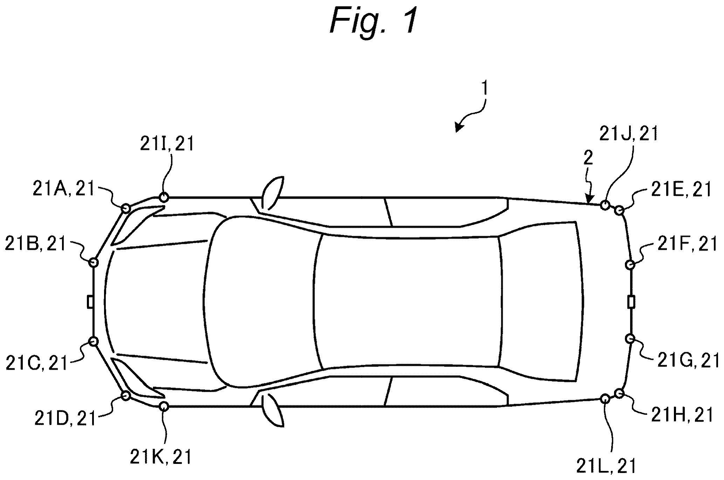

Fig. 1 is a diagram illustrating a configuration example of a vehicle 1 according to a first embodiment. The vehicle 1 is an example of a moving body on which an object detection device according to the present embodiment is mounted. The object detection device according to the present embodiment is a device that detects an obstacle (an example of an object) present around the vehicle 1 on the basis of information such as time of flight (TOF) or Doppler shift acquired by transmission and reception of ultrasonic waves.

The object detection device according to the present embodiment includes a plurality of transmission and reception units 21Ato 21L. Hereinafter, the plurality of transmission and reception units 21A to 21L may be referred to as transmission and reception units 21 in a case where it is not necessary to distinguish the plurality of transmission and reception units 21A to 21L. Each of the transmission and reception units 21 is installed on a vehicle body 2 as an exterior of the vehicle 1, transmits an ultrasonic wave toward the outside of the vehicle body 2, and receives an ultrasonic wave generated by the ultrasonic wave reflected by an object present outside the vehicle body 2. Hereinafter, the ultrasonic wave transmitted from the transmission and reception unit 21 may be referred to as a transmission wave, and the ultrasonic wave generated by the transmission wave reflected by the object may be referred to as a reflected wave.

In the example illustrated in Fig. 1, the four transmission and reception units 21A to 21D are disposed at a front end portion of the vehicle body 2, the four transmission and reception units 21E to 21H are disposed at a rear end portion, the two transmission and reception units 211 and 21J are disposed at a right side surface portion, and the two transmission and reception units 21K and 21L are disposed at a left side surface portion. Note that the number of transmission and reception units 21 and their installation positions are not limited to this example.

### (Configuration of Vehicle Control System 50)

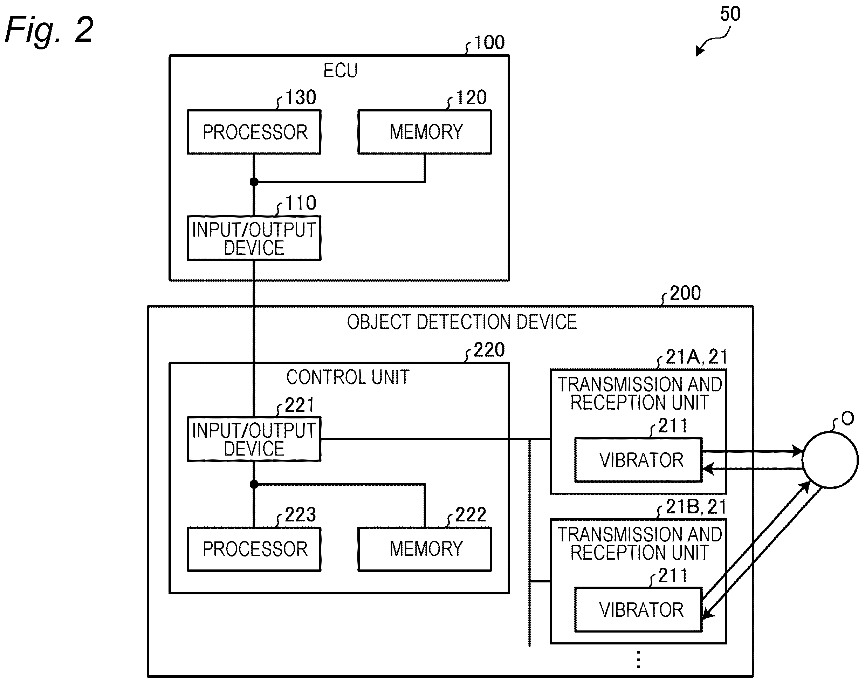

Fig. 2 is a diagram illustrating a configuration example of a vehicle control system 50 according to the embodiment. The vehicle control system 50 performs processing for controlling the vehicle 1 on the basis of information output from an object detection device 200. The vehicle control system 50 according to the present embodiment includes an ECU 100 and the object detection device 200.

The object detection device 200 includes the plurality of transmission and reception units 21 and a control unit 220. Each of the transmission and reception units 21 includes a vibrator 211 configured using a piezoelectric element or the like, an amplifier, and the like, and realizes transmission and reception of an ultrasonic wave by vibration of the vibrator 211. Specifically, each of the transmission and reception units 21 transmits an ultrasonic wave generated in response to the vibration of the vibrator 211 as a transmission wave, and detects the vibration of the vibrator 211 caused by a reflected wave of the transmission wave reflected by an object such as an obstacle O or a road surface. The vibration of the vibrator 211 is converted into an electric signal, and TOF corresponding to a distance from the transmission and reception unit 21 to the obstacle O, Doppler shift information corresponding to a relative speed between the vehicle 1 and the obstacle O, or the like can be acquired on the basis of the electric signal.

In the example illustrated in Fig. 2, a configuration is exemplified in which both the transmission of a transmission wave and the reception of a reflected wave are performed using the single vibrator 211, but the configuration of the transmission and reception unit 21 is not limited thereto. For example, the transmission side and the reception side may be separated as in a configuration in which a vibrator for transmitting a transmission wave and a vibrator for receiving a reflected wave are separately provided.

The control unit 220 includes an input/output device 221, a memory 222, and a processor 223. The input/output device 221 is an interface device that enables transmission and reception of information between the control unit 220 and an external device (the transmission and reception units 21, the ECU 100, or the like). The memory 222 includes a main memory such as a read only memory (ROM) and a random access memory (RAM), and an auxiliary memory such as a hard disk drive (HDD) and a solid state drive (SSD). The processor 223 is an integrated circuit that executes various types of processing for realizing the functions of the control unit 220, and can be configured using, for example, a central processing unit (CPU), an application specific integrated circuit (ASIC), and a field programmable gate array (FPGA) that operate according to a program. The processor 223 executes various types of arithmetic processing and control processing by reading and executing a program stored in the memory 222.

The ECU 100 is a unit that executes various types of processing for controlling the vehicle 1 on the basis of information acquired from the object detection device 200 or the like. The ECU 100 includes an input/output device 110, a memory 120, and a processor 130. The input/output device 110 is an interface device that enables transmission and reception of information between the ECU 100 and an external mechanism (the object detection device 200, a driving mechanism, a braking mechanism, a steering mechanism, a transmission mechanism, an in-vehicle display, a speaker, various sensors, or the like). The memory 120 includes a main memory such as a ROM and a RAM, and an auxiliary memory such as an HDD and an SSD. The processor 130 is an integrated circuit that executes various types of processing for realizing the functions of the ECU 100, and can be configured using, for example, a CPU, an ASIC, and an FPGA. The processor 130 reads a program stored in the memory 120 and executes various types of arithmetic processing and control processing.

### (Method of Calculating Distance by TOF Method)

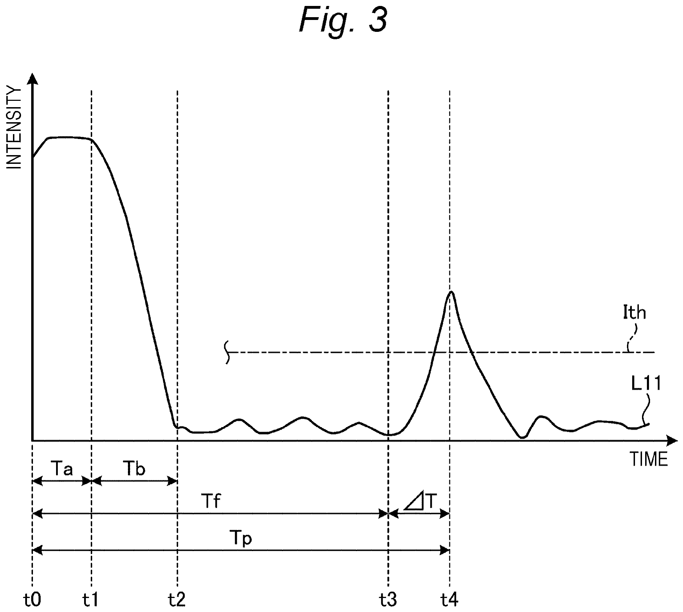

Fig. 3 is a diagram illustrating an example of a method of calculating a distance by TOF method. Fig. 3 illustrates an envelope L11 (echo information) representing a temporal change in the intensity (signal level) of an ultrasonic wave transmitted and received by each transmission and reception unit 21. In the graph illustrated in Fig. 3, the horizontal axis corresponds to time (TOF), and the vertical axis corresponds to the intensity of the ultrasonic wave transmitted and received by the transmission and reception unit 21 (the magnitude of vibration of the vibrator 211).

The envelope L11 represents a temporal change in the intensity showing the magnitude of vibration of the vibrator 211. From the envelope L11 illustrated in Fig. 3, it can be understood that the vibrator 211 is driven from a timing t0 for a time Ta to vibrate, so that the vibration of the vibrator 211 continues due to inertia while damping during a time Tb from completion of transmission of a transmission wave at a timing t1 to a timing t2. Therefore, in the graph illustrated in Fig. 3, the time Tb corresponds to so-called reverberation time.

The envelope L11 reaches a peak where the magnitude of the vibration of the vibrator 211 becomes equal to or higher than a detection threshold value Ith at a timing t4 after the lapse of a time Tp from the timing t0 at which the transmission of the transmission wave is started. The detection threshold value Ith is a value set to identify whether the vibration of the vibrator 211 is caused by reception of a reflected wave from the obstacle O (another vehicle, a structure, a pedestrian, etc.) or by reception of a reflected wave from an object other than the obstacle O (for example, a road surface). Here, the detection threshold value Ith is illustrated as a constant value, but the detection threshold value Ith may be a variation value that changes depending on the situation. Vibration having a peak equal to or higher than the detection threshold value Ith can be regarded as being caused by the reception of the reflected wave from the obstacle O.

The envelope L11 in this example shows that the vibration of the vibrator 211 damps after the timing t4. Therefore, the timing t4 corresponds to a timing at which the reception of the reflected wave from the obstacle O is completed, that is, a timing at which the transmission wave transmitted finally at the timing t1 returns as the reflected wave.

In the envelope L11, a timing t3 as a start point of the peak at the timing t4 corresponds to a timing at which the reflected wave from the obstacle O starts to be received, that is, a timing at which the transmission wave transmitted first at the timing t0 returns as the reflected wave. Therefore, a time ΔT between the timing t3 and the timing t4 is equal to the time Ta as a transmission time of the transmission wave.

From the above description, in order to obtain a distance from the transmission and reception unit 21, which is a transmission and reception source of the ultrasonic wave, to the obstacle O using the TOF, it is necessary to obtain a time Tf between the timing t0 at which the transmission wave starts to be transmitted and the timing t3 at which the reflected wave starts to be received. The time Tf can be obtained by subtracting the time ΔT equal to the time Ta as the transmission time of the transmission wave from the time Tp as a difference between the timing t0 and the timing t4 at which the intensity of the reflected wave reaches the peak exceeding the detection threshold value Ith.

The timing t0 at which the transmission wave starts to be transmitted can be easily specified as a timing at which the object detection device 200 starts operating, and the time Ta as the transmission time of the transmission wave is determined in advance by setting or the like. Therefore, by specifying the timing t4 at which the intensity of the reflected wave reaches the peak equal to or higher than the detection threshold value Ith, the distance from the vehicle 1 (the transmission and reception unit 21 that is the transmission and reception source of the ultrasonic wave) to the obstacle O can be obtained.

Note that the above calculation method is an example, and the distance from the vehicle 1 to the obstacle O may be calculated appropriately using a known or novel method.

### (Functional Configuration of Object Detection Device 200)

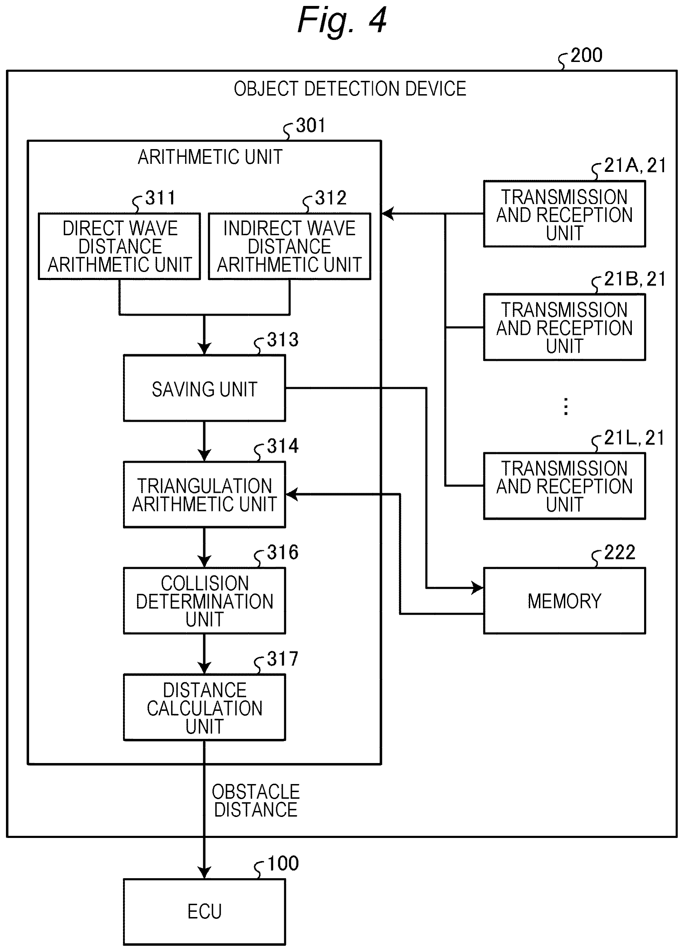

Fig. 4 is a diagram illustrating a functional configuration example of the object detection device 200 according to the embodiment. As illustrated in Fig. 4, the object detection device 200 according to the present embodiment includes an arithmetic unit 301, and the memory 222 and the plurality of transmission and reception units 21 (21A to 21L) described above.

The arithmetic unit 301 calculates an obstacle distance (an example of an object distance), which is a distance from the vehicle 1 to the obstacle O, on the basis of transmission and reception timings of an ultrasonic wave in each of the transmission and reception units 21. A reflected wave received by each transmission and reception unit 21 according to the present embodiment includes a direct wave and an indirect wave. The direct wave is a reflected wave corresponding to a transmission wave transmitted from one transmission and reception unit 21 (for example, the transmission and reception unit 21A), and received by the same transmission and reception unit 21 (for example, the transmission and reception unit 21A) as the transmission and reception unit 21 that has transmitted the transmission wave. The indirect wave is a reflected wave corresponding to a transmission wave transmitted from one transmission and reception unit 21 (for example, the transmission and reception unit 21A), and received by a different transmission and reception unit 21 (for example, the transmission and reception unit 21B) from the transmission and reception unit 21 that has transmitted the transmission wave. The arithmetic unit 301 of the present embodiment calculates the obstacle distance using both the reception timing of the direct wave and the reception timing of the indirect wave.

As illustrated in Fig. 4, the arithmetic unit 301 according to the present embodiment includes a direct wave distance arithmetic unit 311, an indirect wave distance arithmetic unit 312, a saving unit 313, a triangulation arithmetic unit 314, a collision determination unit 316, and a distance calculation unit 317. These functional units can be realized, for example, by cooperation of hardware and software (program or the like) of the object detection device 200 as illustrated in Fig. 2. At least some of these functional units may be realized by dedicated hardware (circuit).

In a case where a reflected wave of a transmission wave transmitted from a first transmission and reception unit (for example, 21A) that is one of the plurality of transmission and reception units 21 is received by the first transmission and reception unit, the direct wave distance arithmetic unit 311 calculates a first direct wave distance on the basis of a timing at which the transmission wave is transmitted from the first transmission and reception unit and a timing at which the reflected wave (direct wave) of the transmission wave is received by the first transmission and reception unit. In a case where a reflected wave of a transmission wave transmitted from a second transmission and reception unit (for example, 21B) different from the first transmission and reception unit is received by the second transmission and reception unit, the direct wave distance arithmetic unit 311 calculates a second direct wave distance on the basis of a timing at which the transmission wave is transmitted from the second transmission and reception unit and a timing at which the reflected wave (direct wave) of the transmission wave is received by the second transmission and reception unit. That is, the first direct wave distance is calculated on the basis of the direct wave received by the first transmission and reception unit, and the second direct wave distance is calculated on the basis of the direct wave received by the second transmission and reception unit.

In a case where a reflected wave of a transmission wave transmitted from a third transmission and reception unit (for example, 21A) that is one of the plurality of transmission and reception units 21 is received by a fourth transmission and reception unit (for example, 21B) different from the third transmission and reception unit, the indirect wave distance arithmetic unit 312 calculates a first indirect wave distance on the basis of a timing at which the transmission wave is transmitted from the third transmission and reception unit and a timing at which the reflected wave (indirect wave) of the transmission wave is received by the fourth transmission and reception unit. In a case where a reflected wave of a transmission wave transmitted from the fourth transmission and reception unit is received by the third transmission and reception unit, the indirect wave distance arithmetic unit 312 calculates a second indirect wave distance on the basis of a timing at which the transmission wave is transmitted from the fourth transmission and reception unit and a timing at which the reflected wave (indirect wave) of the transmission wave is received by the third transmission and reception unit. That is, the first indirect wave distance is calculated on the basis of the indirect wave transmitted from the third transmission and reception unit and received by the fourth transmission and reception unit, and the second indirect wave distance is calculated on the basis of the indirect wave transmitted from the fourth transmission and reception unit and received by the third transmission and reception unit.

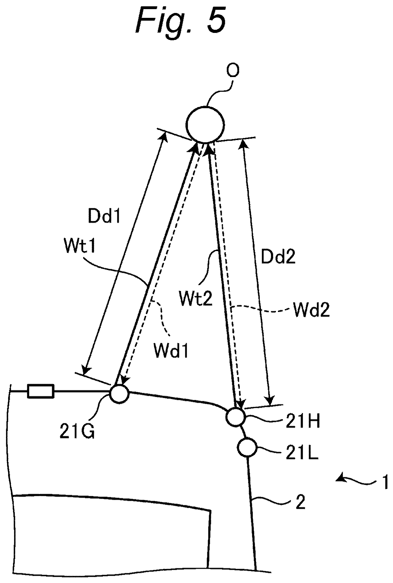

Fig. 5 is a diagram illustrating an example of a first direct wave distance Dd1 and a second direct wave distance Dd2 according to the embodiment. Fig. 5 illustrates a situation in which the two transmission and reception units 21G and 21H installed at the rear portion of the vehicle 1 are adopted as the first transmission and reception unit and the second transmission and reception unit, respectively, and the obstacle O is present behind the vehicle 1. In Fig. 5, a first transmission wave Wt1 transmitted from the first transmission and reception unit 21G and a first direct wave Wd1 generated by the first transmission wave Wt1 reflected by the obstacle O and received by the first transmission and reception unit 21G are illustrated. A second transmission wave Wt2 transmitted from the second transmission and reception unit 21H and a second direct wave Wd2 generated by the second transmission wave Wt2 reflected by the obstacle O and received by the second transmission and reception unit 21H are also illustrated.

The first direct wave distance Dd1 is calculated on the basis of a timing at which the first transmission wave Wt1 is transmitted from the first transmission and reception unit 21G and a timing at which the first direct wave Wd1 is received by the first transmission and reception unit 21G. The second direct wave distance Dd2 is calculated on the basis of a timing at which the second transmission wave Wt2 is transmitted from the second transmission and reception unit 21H and a timing at which the second direct wave Wd2 is received by the second transmission and reception unit 21H.

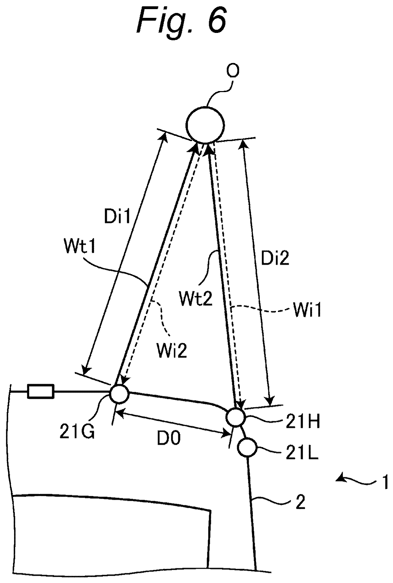

Fig. 6 is a diagram illustrating an example of a first indirect wave distance Di1 and a second indirect wave distance Di2 according to the embodiment. Fig. 6 illustrates a situation in which the two transmission and reception units 21G and 21H installed at the rear portion of the vehicle 1 are adopted as the third transmission and reception unit and the fourth transmission and reception unit, respectively, and the obstacle O is present behind the vehicle 1. Here, a case where the above first transmission and reception unit and the third transmission and reception unit are the same transmission and reception unit 21G, and the above second transmission and reception unit and the fourth transmission and reception unit are the same transmission and reception unit 21H will be exemplified, but the present disclosure is not limited thereto.

Fig. 6 illustrates a situation in which the fourth transmission and reception unit 21H receives a first indirect wave Wi1 and the third transmission and reception unit 21G receives a second indirect wave Wi2. The first indirect wave Wi1 is a reflected wave generated by the first transmission wave Wt1 transmitted from the third transmission and reception unit 21G and reflected by the obstacle O. The second indirect wave Wi2 is a reflected wave generated by the second transmission wave Wt2 transmitted from the fourth transmission and reception unit 21H and reflected by the obstacle O.

The first indirect wave distance Di1 is calculated on the basis of a timing at which the first transmission wave Wt1 is transmitted from the third transmission and reception unit 21G and a timing at which the first indirect wave Wi1 is received by the fourth transmission and reception unit 21H. The second indirect wave distance Di2 is calculated on the basis of a timing at which the second transmission wave Wt2 is transmitted from the fourth transmission and reception unit 21H and a timing at which the second indirect wave Wi2 is received by the third transmission and reception unit 21G.

Returning to Fig. 4, every time one or more reflected waves with respect to a transmission wave transmitted from any one of the plurality of transmission and reception units 21 are received, the saving unit 313 saves a distance based on the one or more reflected waves in the memory 222 as detection data.

Specifically, in a case where the reflected wave is a direct wave, the saving unit 313 saves a distance calculated by the direct wave distance arithmetic unit 311 for each of one or more direct waves in the memory 222 as detection data. In a case where the reflected wave is an indirect wave, the saving unit 313 saves a distance calculated by the indirect wave distance arithmetic unit 312 for each of one or more indirect waves in the memory 222 as detection data. Details of the detection data will be described later.

Every time one or more reflected waves with respect to a transmission wave transmitted from any one of the plurality of transmission and reception units 21 are received, the triangulation arithmetic unit 314 adopts a distance based on the one or more reflected waves as detection data, and in a case where the reflected wave has predetermined reliability, sets the detection data of the reflected wave having the reliability as reference detection data.

Here, in a case where the intensity of the reflected wave exceeds a predetermined threshold value, the triangulation arithmetic unit 314 determines that the reflected wave has the predetermined reliability (that is, the reliability is high). The predetermined threshold value is an automatic threshold value that varies depending on the intensity. The triangulation arithmetic unit 314 determines that the reflected wave has the predetermined reliability in a case where the intensity of the reflected wave exceeds the automatic threshold value by a predetermined amount or more.

A value exceeding the automatic threshold value by the predetermined amount is referred to as a reliability threshold value. Therefore, in a case where the intensity of the reflected wave exceeds the reliability threshold value, the triangulation arithmetic unit 314 determines that the reflected wave has the predetermined reliability.

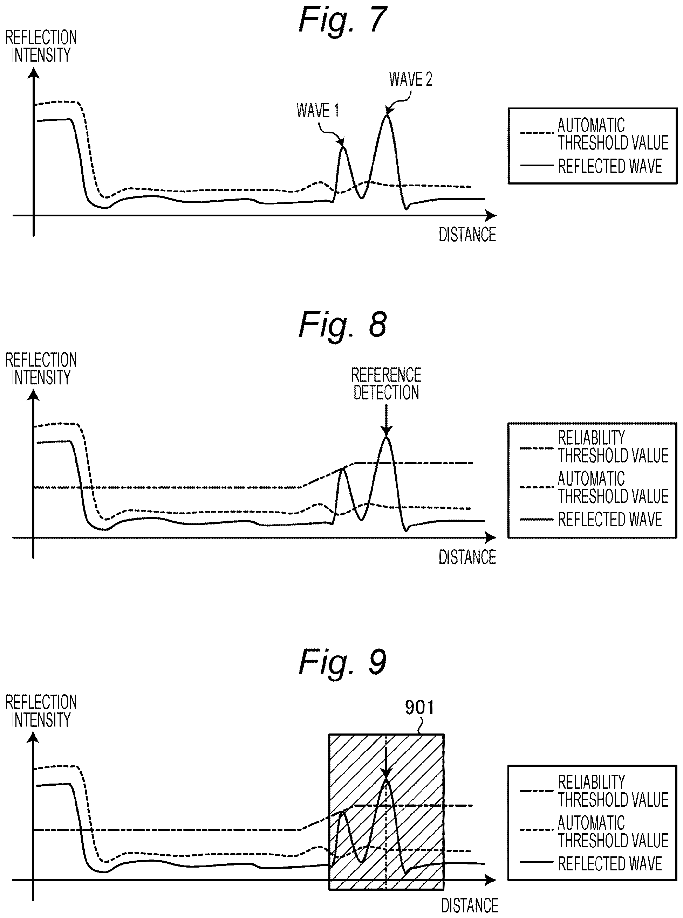

Fig. 7 is a diagram illustrating an example of waveforms of a plurality of reflected waves with respect to a transmission wave according to the first embodiment. In Fig. 7, the vertical axis represents the intensity of the reflected wave, and the horizontal axis represents the distance. In Fig. 7, the waveform of the reflected wave is indicated by a solid line, and the automatic threshold value is indicated by a dashed line. In the waveform example in Fig. 7, two reflected waves exceeding the automatic threshold value are referred to as wave 1 and wave 2 in order from the left.

Fig. 8 is a diagram illustrating an example of the waveforms of the reflected waves according to the first embodiment. In Fig. 8, the vertical axis represents the intensity of the reflected wave, and the horizontal axis represents the distance. In Fig. 8, the waveform of the reflected wave is indicated by a solid line, and the automatic threshold value is indicated by a dashed line. The reliability threshold value is indicated by a two-dot chain line.

In the example illustrated in Fig. 8, the triangulation arithmetic unit 314 determines that a reflected wave exceeding the reliability threshold value and indicated by an arrow has the predetermined reliability, that is, the reliability is high. This reflected wave is referred to as reference detection data.

The triangulation arithmetic unit 314 performs triangulation on each of a plurality of pieces of the detection data included in a predetermined range of the reference detection data and calculates a plurality of coordinates based on the detection data up to the obstacle. Here, the triangulation may be referred to as trilateration. Each of the plurality of coordinates based on the detection data may be referred to as a triangulation point.

Fig. 9 is a diagram illustrating an example of the predetermined range of the reference detection data in the waveforms of the reflected waves in the first embodiment. In the example of Fig. 9, a range apart forwardly and backwardly by a predetermined distance from the distance of the reference detection data is set as a predetermined range 901. The triangulation arithmetic unit 314 performs triangulation on each of a plurality of pieces of the detection data included in the predetermined range 901 of the reference detection data and calculates a plurality of coordinates based on the detection data up to the obstacle.

Here, the waveforms of the reflected waves as illustrated in Fig. 9 are obtained for each of the direct wave and the indirect wave. The triangulation arithmetic unit 314 performs the triangulation on each of the plurality of pieces of detection data of the reflected waves included in the predetermined range of the reference detection data and equal to or higher than the automatic threshold value in each of the waveforms of the direct wave and the indirect wave, and calculates the plurality of coordinates based on the detection data up to the obstacle.

More specifically, suppose that there are n pieces of detection data for the direct wave and m pieces of detection data for the indirect wave, the detection data being equal to or higher than the automatic threshold value, in the predetermined range. In this case, the triangulation arithmetic unit 314 performs the triangulation using the detection data as many as the number of combinations of n and m. For example, in a case where there are two pieces of detection data equal to or higher than the automatic threshold value for each of the direct wave and the indirect wave as illustrated in the example of Fig. 9, the triangulation is performed in the following four combinations, and the coordinates based on the detection data are calculated.$Direct wave 1 \times direct wave 2$$Direct wave 1 \times indirect wave 1$$Direct wave 2 \times indirect wave 1$$Direct wave 2 \times indirect wave 2$

Returning to Fig. 4, specifically, in a case where the first direct wave distance and the second direct wave distance illustrated in Fig. 5 are calculated by the direct wave distance arithmetic unit 311, the triangulation arithmetic unit 314 calculates the coordinates based on the detection data by the triangulation on the basis of the first direct wave distance and the second direct wave distance.

In a case where the first indirect wave distance and the second indirect wave distance illustrated in Fig. 6 are calculated by the indirect wave distance arithmetic unit 312, the triangulation arithmetic unit 314 calculates the coordinates based on the detection data by the triangulation on the basis of the first indirect wave distance and the second indirect wave distance.

Furthermore, in a case where the first direct wave distance illustrated in Fig. 5 is calculated by the direct wave distance arithmetic unit 311 and the second indirect wave distance illustrated in Fig. 6 is calculated by the indirect wave distance arithmetic unit 312, the triangulation arithmetic unit 314 calculates the coordinates based on the detection data by the triangulation on the basis of the first direct wave distance and the second indirect wave distance.

The triangulation arithmetic unit 314 outputs the calculated coordinates to the collision determination unit 316.

The collision determination unit 316 obtains a moving direction of the obstacle on the basis of the plurality of coordinates obtained every time the transmission wave is transmitted, and determines whether the vehicle 1 collides with the obstacle on the basis of the moving direction.

Specifically, the collision determination unit 316 calculates the coordinates of a centroid point of the plurality of coordinates. The collision determination unit 316 saves the calculated coordinates of the centroid point in the memory 222.

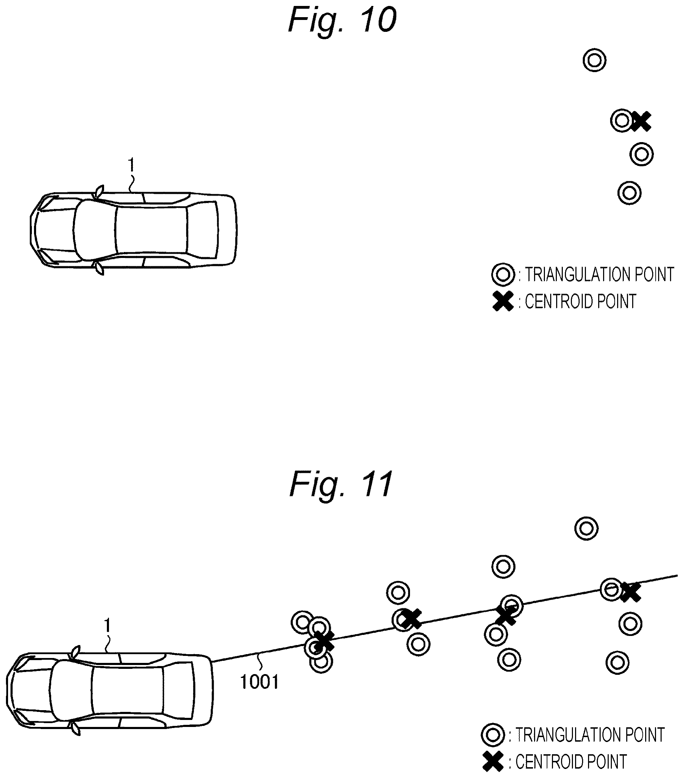

Fig. 10 is a diagram illustrating an example of the centroid point in the first embodiment. In Fig. 10, the sign o represents the plurality of coordinates (triangulation points) calculated by the triangulation. The sign × represents the centroid point. The centroid point is calculated by a known method.

The collision determination unit 316 obtains a regression line from the positions of a plurality of the centroid points each obtained every time the transmission wave is transmitted. The regression line is a straight line representing the moving direction of the obstacle.

Fig. 11 is a diagram illustrating an example of the triangulation points, the centroid points, and the regression line in the first embodiment. In Fig. 11, the regression line obtained from the centroid points is a straight line denoted by reference numeral 1001. The calculation of the regression line from the centroid points is performed by a known method.

Returning to Fig. 4, the collision determination unit 316 determines that the vehicle 1 collides with the obstacle in a case where the regression line intersects with the position of the vehicle 1. The collision determination unit 316 determines that the vehicle 1 does not collide with the obstacle in a case where the regression line does not intersect with the position of the vehicle 1. In the example of Fig. 11, the regression line 1001 intersects with the vehicle 1, so that it is determined that the vehicle 1 collides with the obstacle.

The distance calculation unit 317 calculates the obstacle distance from the coordinates (triangulation points) based on the detection data by calculation methods with different accuracy according to the determination result by the collision determination unit 316. That is, the distance calculation unit 317 calculates the obstacle distance by a first method in a case where it is determined that the vehicle 1 does not collide with the obstacle, and calculates the obstacle distance by a second method in a case where it is determined that the vehicle 1 collides with the obstacle. Here, the second method is a distance calculation method with higher accuracy than the first method.

In the present embodiment, the distance calculation unit 317 uses the first method to calculate, as the obstacle distance, a distance from a corner of an end portion (for example, the rear end portion) of the vehicle 1 where the transmission and reception unit 21 is provided to the position of the reference detection data.

The distance calculation unit 317 uses the second method to calculate, as the obstacle distance, a distance from an intersection of a line obtained by extending an end portion (for example, the rear end portion) of the vehicle 1 where the transmission and reception unit 21 is provided and a straight line that is orthogonal to the line, extends in parallel with a traveling direction of the vehicle 1, and intersects with the position of the reference detection data, to the position of the reference detection data.

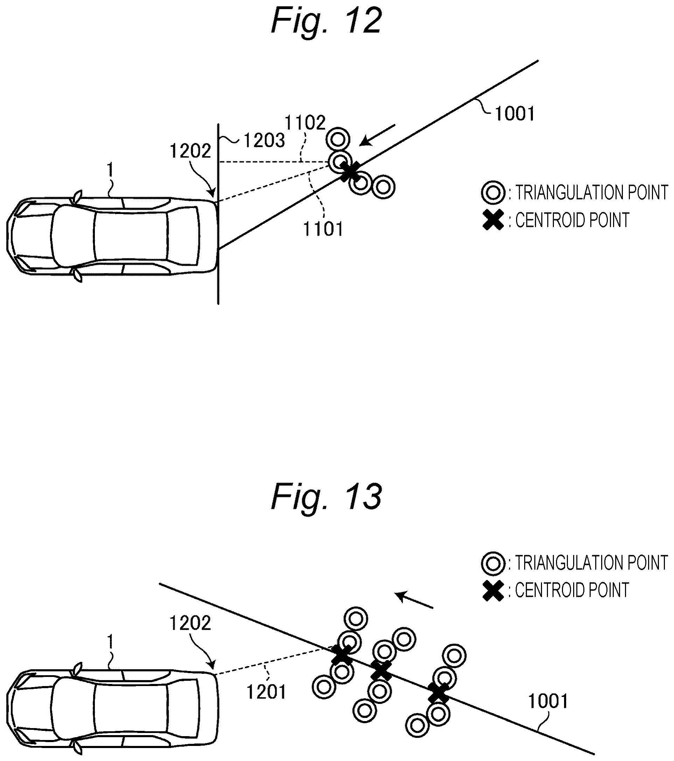

Fig. 12 is a diagram illustrating the method of calculating the obstacle distance in a case where the vehicle 1 collides with the obstacle in the first embodiment.

Fig. 13 is a diagram illustrating the method of calculating the obstacle distance in a case where the vehicle 1 does not collide with the obstacle in the first embodiment.

In the example of Fig. 13, since the regression line 1001 does not intersect with the vehicle 1, it is determined that the vehicle 1 does not collide with the obstacle.

In the case of the example of Fig. 13, the distance calculation unit 317 uses the first method to calculate, as the obstacle distance, a distance 1201 from a corner 1202 of the rear end portion of the vehicle 1 where the transmission and reception unit 21 is provided to the position of the reference detection data.

On the other hand, in the example of Fig. 12, since the regression line 1001 intersects with the vehicle 1, it is determined that the vehicle 1 collides with the obstacle.

In the case of the example of Fig. 12, the distance calculation unit 317 uses the second method to calculate, as the obstacle distance, a distance 1102 from an intersection of a line 1203 obtained by extending the rear end portion of the vehicle 1 where the transmission and reception unit 21 is provided and a straight line that is orthogonal to the line 1203, extends in parallel with the traveling direction of the vehicle 1, and intersects with the position of the reference detection data, to the position of the reference detection data. In the case of Fig. 12, when calculated by the first method as in Fig. 13, the obstacle distance is a distance 1101. However, since the vehicle 1 collides with the obstacle, the distance calculation unit 317 calculates the distance 1102, which is more accurate, by the second method as the obstacle distance.

### (Object Detection Processing)

Next, object detection processing by the object detection device 200 according to the present embodiment configured as described above will be described.

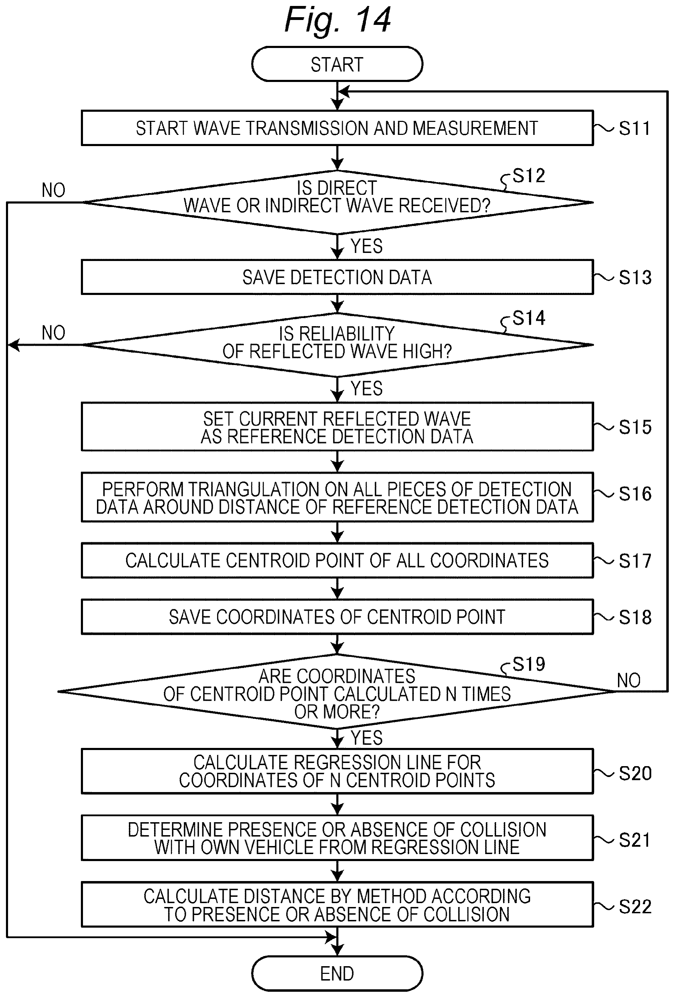

Fig. 14 is a flowchart illustrating an example of the object detection processing according to the first embodiment.

First, the transmission and reception unit 21 transmits a transmission wave and starts measuring a distance (S11).

Next, the saving unit 313 determines whether or not the transmission and reception unit 21 receives a direct wave or an indirect wave as a reflected wave with respect to the transmission wave (S12). In a case where the direct wave or the indirect wave is not received (S12: No), the processing ends.

On the other hand, in a case where the direct wave or the indirect wave is received (S12: Yes), the following processing is executed for each of the direct wave and the indirect wave.

That is, in a case where the direct wave is received, the direct wave distance arithmetic unit 311 calculates the distance to the object, and in a case where the indirect wave is received, the indirect wave distance arithmetic unit 312 calculates the distance to the obstacle. Then, the saving unit 313 saves the calculated distance in the memory 222 as the detection data for each reflected wave (S13).

Next, the triangulation arithmetic unit 314 determines whether the reliability of the current reflected wave is high, that is, whether the current reflected wave has the predetermined reliability (S14). In a case where the current reflected wave does not have the predetermined reliability and the reliability is low (S14: No), the processing ends.

On the other hand, in a case where the reflected wave has the predetermined reliability and the reliability is high (S14: Yes), the triangulation arithmetic unit 314 sets the detection data of the current reflected wave as the reference detection data (S15). Next, the triangulation arithmetic unit 314 performs the triangulation on all the pieces of detection data equal to or higher than the automatic threshold value around the distance of the reference detection data, that is, in the above-described predetermined range (S16). As a result, the plurality of coordinates (triangulation points) corresponding to the plurality of pieces of detection data is obtained.

Next, the triangulation arithmetic unit 314 calculates the centroid point of the plurality of coordinates obtained by the triangulation in S16 (S17). Then, the triangulation arithmetic unit 314 saves the coordinates of the centroid point calculated in S17 in the memory 222 (S18).

Next, the triangulation arithmetic unit 314 determines whether the coordinates of the centroid point have been calculated N times or more (S19). Here, N is a predetermined number and may be set to any number. In a case where the coordinates of the centroid point have been calculated less than N times (S19: No), the processing returns to S11, and the processing from S11 to S18 is repeatedly executed.

In a case where the coordinates of the centroid point have been calculated N times or more in S19 (S19: Yes), the triangulation arithmetic unit 314 calculates the regression line for the coordinates of the N centroid points (S20).

Next, the collision determination unit 316 determines whether the own vehicle (the vehicle 1) collides with the obstacle from the regression line (S21). Next, the distance calculation unit 317 calculates the obstacle distance from the vehicle 1 to the obstacle by the above-described method according to the presence or absence of collision (S22). Then, the processing ends.

### (Overview)

As described above, the object detection device 200 according to the present embodiment adopts the distance based on the one or more reflected waves with respect to the transmission wave transmitted from any one of the plurality of transmission and reception units 21 as the detection data every time the one or more reflected waves are received, in a case where the reflected wave has the predetermined reliability, sets the detection data of the reflected wave having the reliability as the reference detection data, performs the triangulation on each of the plurality of pieces of detection data included in the predetermined range of the reference detection data, calculates the plurality of coordinates based on the detection data up to the obstacle, obtains the moving direction of the obstacle on the basis of the plurality of coordinates obtained every time the transmission wave is transmitted, and determines whether the vehicle 1 collides with the obstacle on the basis of the moving direction.

Therefore, in the present embodiment, since the possibility of collision is determined by predicting the moving direction of the obstacle, an obstacle target and movement of the target are not limited, and highly accurate collision determination can be performed.

The object detection device 200 according to the present embodiment calculates the centroid point of the plurality of coordinates, obtains the regression line representing the moving direction from the positions of the plurality of centroid points each obtained every time the transmission wave is transmitted, and determines that the vehicle 1 collides with the obstacle in a case where the regression line intersects with the position of the vehicle 1.

Therefore, in the present embodiment, a calculation error of the obstacle position is reduced by calculating the plurality of coordinates based on the detection data and the centroid point thereof. As a result, according to the present embodiment, an obstacle target and movement of the target are not limited, and highly accurate collision determination can be performed.

The object detection device 200 according to the present embodiment calculates the obstacle distance by the first method in a case where it is determined that the vehicle 1 does not collide with the obstacle, and calculates the obstacle distance by the second method with higher accuracy than the first method in a case where it is determined that the vehicle 1 collides with the obstacle.

Therefore, according to the present embodiment, in a case where it is determined that the vehicle 1 collides with the obstacle, the obstacle distance is calculated by the second method with higher accuracy. As a result, an obstacle target and movement of the target are not limited, and more highly accurate collision determination can be performed.

### [Second Embodiment]

In the first embodiment, the collision determination with the obstacle is performed using the detection data of the reflected wave having reflection intensity equal to or higher than the automatic threshold value from among the reflected waves with respect to the transmission wave. However, in a second embodiment, in a case where the detection data of a reflected wave having reflection intensity less than the automatic threshold value can be detected to be obtained from the same object, the collision determination with the obstacle is performed using this detection data.

The vehicle 1 and the vehicle control system 50 according to the present embodiment have similar configurations to those of the first embodiment. Therefore, descriptions of the configuration of the vehicle 1 and the configuration of the vehicle control system 50 will be omitted.

### (Configuration of Object Detection Device 1200)

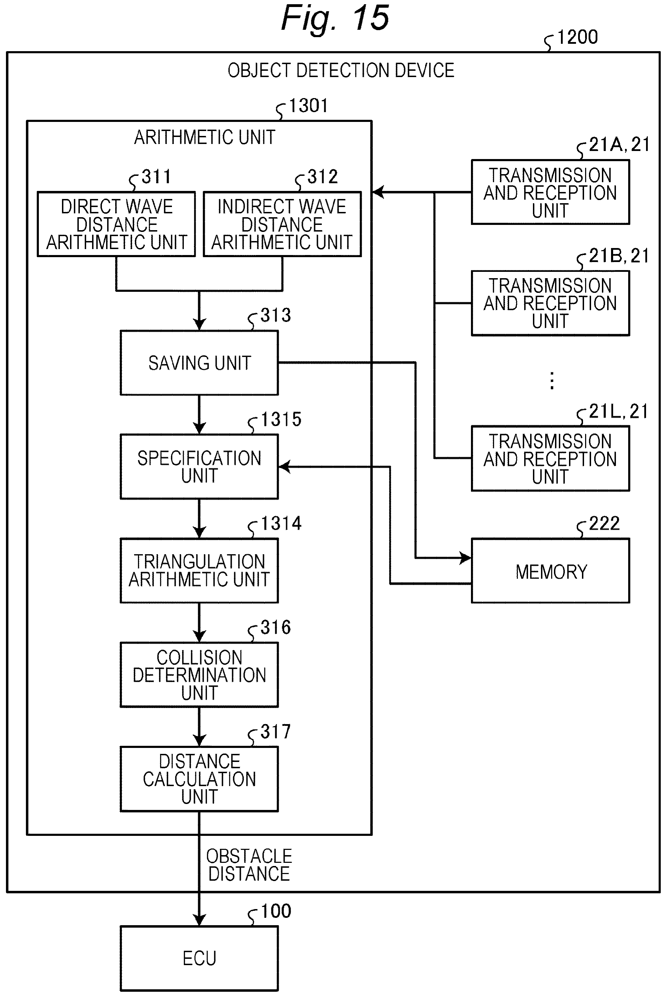

Fig. 15 is a block diagram illustrating a functional configuration example of an object detection device 1200 according to the second embodiment. As illustrated in Fig. 15, the object detection device 1200 according to the present embodiment includes an arithmetic unit 1301, the memory 222, and the plurality of transmission and reception units 21 (21A to 21L). The memory 222 and the plurality of transmission and reception units 21 (21A to 21L) are similar to those of the first embodiment. Therefore, these configurations are denoted by the same reference numerals as those of the first embodiment, and descriptions thereof will be omitted.

Similarly to the first embodiment, the arithmetic unit 1301 calculates an obstacle distance (an example of an object distance), which is a distance from the vehicle 1 to the obstacle O, on the basis of transmission and reception timings of an ultrasonic wave in each of the transmission and reception units 21. As illustrated in Fig. 15, the arithmetic unit 1301 according to the present embodiment includes the direct wave distance arithmetic unit 311, the indirect wave distance arithmetic unit 312, the saving unit 313, a specification unit 1315, a triangulation arithmetic unit 1314, the collision determination unit 316, and the distance calculation unit 317. Similarly to the first embodiment, these functional units can be realized by cooperation of hardware and software (program or the like) of the object detection device 1200 as illustrated in Fig. 2. At least some of these functional units may be realized by dedicated hardware (circuit).

Here, the direct wave distance arithmetic unit 311, the indirect wave distance arithmetic unit 312, the saving unit 313, the collision determination unit 316, and the distance calculation unit 317 are similar to those of the first embodiment.

In a case where a current reflected wave has predetermined reliability, the specification unit 1315 sets the detection data of the current reflected wave as reference detection data, and calculates a trace-back amount on the basis of movement information of the vehicle 1 (for example, a speed and a movement time of the vehicle 1) from a time point of reception of a previous reflected wave. The specification unit 1315 specifies the detection data of the same object from among a plurality of pieces of the detection data saved in the memory 222 on the basis of the reference detection data and the trace-back amount.

More specifically, the specification unit 1315 specifies, as the detection data of the same object, detection data related to a reflected wave received at a timing traced back by the calculated trace-back amount from a timing of receiving the current reflected wave on the basis of the reference detection data and the trace-back amount.

Here, in a case where the intensity of the current reflected wave exceeds a predetermined threshold value, the specification unit 1315 determines that the current reflected wave has the predetermined reliability (that is, the reliability is high). More specifically, the predetermined threshold value is similar to that of the first embodiment, and is the automatic threshold value that varies depending on the intensity. The specification unit 1315 determines that the current reflected wave has the predetermined reliability in a case where the intensity of the current reflected wave exceeds the automatic threshold value by a predetermined amount or more. The reliability threshold value is also similar to that of the first embodiment.

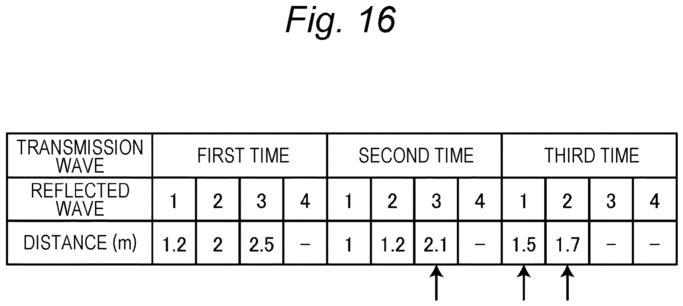

Fig. 16 is a diagram illustrating an example of the detection data according to the second embodiment. In the example of Fig. 16, a transmission wave, the number (that is, wave 1, wave 2, wave 3,...) of a reflected wave received with respect to one transmission wave, and a distance calculated on the basis of the reflected wave are recorded as the detection data.

The detection data in Fig. 16 corresponds to the reflected waves in Fig. 7. The wave 1 and the wave 2 of the reflected waves in Fig. 7 respectively correspond to a distance "1.5 m" of the wave 1 and a distance "1.7 m" of the wave 2 indicated by arrows of the reflected waves for the current transmission wave in the detection data of Fig. 16.

In the example of Fig. 7, the wave 2 of the reflected waves for the current transmission wave has the predetermined reliability (that is, the reliability is high). Thus, the specification unit 1315 sets the distance "1.7 m", which is the detection data of the wave 2, as the reference detection data.

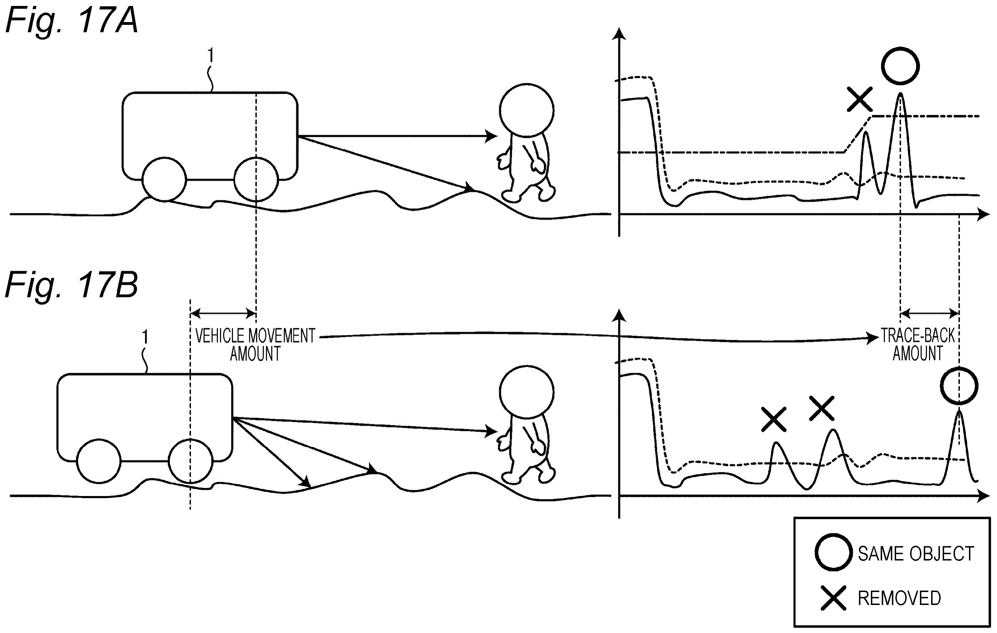

Figs. 17A and 17B are diagrams illustrating an example of movement of the vehicle 1 and waveforms of reflected waves in the second embodiment. The vehicle 1 moves from a left position illustrated in Fig. 17B to a left position illustrated in Fig. 17A. The waveforms of the reflected waves at this time are illustrated on the right sides of Figs. 17A and 17B.

The specification unit 1315 calculates a movement amount of the vehicle 1 from a movement speed and a movement time of the vehicle 1, and sets this value as the trace-back amount. Here, suppose that the calculated trace-back amount is, for example, 0.4 m in the example of the detection data in Fig. 16. At this time, the specification unit 1315 specifies that the detection data having a distance of "2.1 m" (that is, the detection data of the wave 3 indicated by an arrow among the reflected waves for the second (previous) transmission wave) obtained by adding a trace-back amount of 0.4 m to the detection data "1.7 m" of the wave 2 of the reflected waves for the third (current) transmission wave as the reference detection data is the detection data of the same obstacle as the object detected by the wave 2 of the reflected waves for the third (current) transmission wave. The specification unit 1315 then removes a reflected wave other than the wave 3 as a reflected wave from a road surface or the like other than the obstacle. In this manner, the reflected wave from the same obstacle can be specified.

In other words, in a case where the intensity of the previous reflected wave is less than the automatic threshold value, the previous reflected wave is not used for calculation of the centroid point for collision determination. However, among the previous reflective waves having intensity less than the automatic threshold value, there may be a reflected wave from the same obstacle as the current reflected wave as the reference detection data. In such a case, the accuracy of the collision determination is further improved in a case where the centroid point is calculated using the reflected wave of the same obstacle and used for the obstacle determination as compared with a case where the detection data equal to or higher than the automatic threshold value is used. Therefore, in the present embodiment, the specification unit 1315 specifies the detection data of the reflected wave from the same obstacle.

The triangulation arithmetic unit 1314 obtains a first distance and a centroid point from the detection data equal to or higher than the automatic threshold value in the predetermined range 901 of the reference detection data by the method described in the first embodiment with respect to the previous reflected wave. The triangulation arithmetic unit 1314 further performs the triangulation on the detection data specified by the specification unit 1315 with respect to the previous reflected wave, calculates a plurality of coordinates based on the previous detection data, obtains a centroid point using the coordinates based on the detection data, and obtains a regression line using the centroid point with respect to the previous reflected wave.

### (Object Detection Processing)

Next, object detection processing by the object detection device 1200 according to the present embodiment configured as described above will be described.

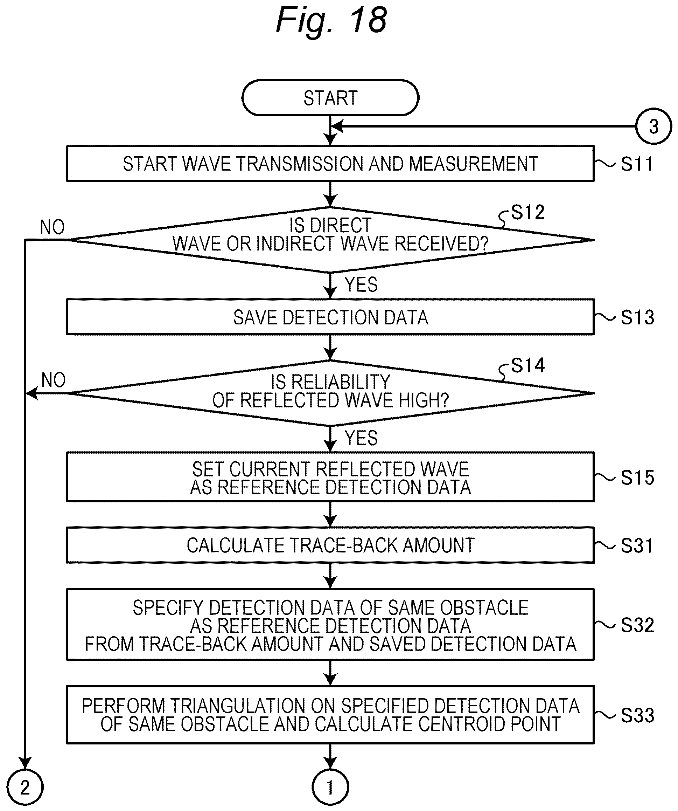

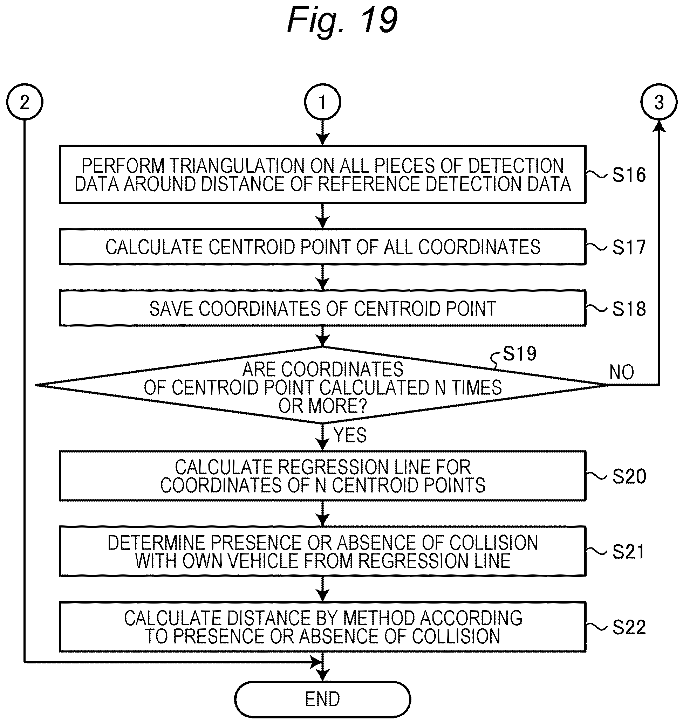

Figs. 18 and 19 are flowcharts illustrating an example of the object detection processing according to the second embodiment. Processing from the start of the wave transmission and measurement to the saving of the detection data (S11 to S13) is similar to that of the first embodiment.

Next, the specification unit 1315 determines whether the reliability of the current reflected wave is high, that is, whether the current reflected wave has the predetermined reliability (S14). In a case where the current reflected wave does not have the predetermined reliability and the reliability is low (S14: No), the processing ends.

On the other hand, in a case where the current reflected wave has the predetermined reliability and the reliability is high (S14: Yes), the specification unit 1315 sets the detection data of the current reflected wave as the reference detection data (S15). Then, the specification unit 1315 calculates the trace-back amount from the movement information of the vehicle 1 (S31).

Next, the specification unit 1315 specifies the detection data of the same obstacle as the obstacle at the distance of the reference detection data as described above from the calculated trace-back amount and the detection data saved in the memory 222 (S32).

Next, the triangulation arithmetic unit 1314 discards the centroid point already calculated for the previous reflected wave, performs the triangulation using the specified detection data of the same obstacle, obtains the coordinates (triangulation points) based on the detection data, and further calculates the centroid point (S33).

Next, the triangulation arithmetic unit 1314 performs the processes of performing the triangulation (S16), calculating the centroid point (S17), and saving the coordinates of the centroid point (S18) with respect to the current reflected wave similarly to the first embodiment.

Next, the triangulation arithmetic unit 1314 determines whether the coordinates of the centroid point have been calculated N times or more (S19). In a case where the coordinates of the centroid point have been calculated less than N times (S19: No), the processing returns to S11, and the processing from S11 to S18 is repeatedly executed.

In a case where the coordinates of the centroid point have been calculated N times or more in S19 (S19: Yes), the calculation of the regression line by the triangulation arithmetic unit 1314 (S20), the collision determination by the collision determination unit 316 (S21), and the calculation of the obstacle distance by the distance calculation unit 317 (S22) are performed similarly to the first embodiment, and the processing ends.

### (Overview)

As described above, the object detection device 1200 according to the present embodiment sets the detection data of the current reflected wave as the reference detection data in a case where the current reflected wave has the predetermined reliability, calculates the trace-back amount on the basis of the movement information of the vehicle 1 from the time point of reception of the previous reflected wave, specifies the detection data of the same obstacle from among the plurality of pieces of detection data saved in the memory 222 on the basis of the reference detection data and the trace-back amount, performs the triangulation on the specified detection data with respect to the previous reflected wave, and calculates the coordinates based on the plurality of pieces of previous detection data.

Therefore, even in a case where the intensity of the previous reflected wave corresponding to the obstacle is low, the detection data of the same obstacle as the obstacle of the current reflected wave as the reference detection data is specified, and the specified detection data is used for the calculation of the centroid point and the collision determination. As a result, according to the present embodiment, an obstacle target and movement of the target are not limited, and more highly accurate collision determination can be performed.

In the above embodiments, as an example of the object, the obstacle has been used to describe the collision determination between the vehicle 1 and the obstacle and the calculation of the obstacle distance from the vehicle 1 to the obstacle. However, the present embodiment can also be applied to an object other than the obstacle.

In the above embodiments, as an example of the moving body, the vehicle 1 has been used to describe the collision determination between the vehicle 1 and the obstacle and the calculation of the obstacle distance from the vehicle 1 to the obstacle. However, the present embodiment can also be applied to a moving body other than the vehicle 1.

An object detection program executed by the object detection devices 200 and 1200 according to the above embodiments is provided by being incorporated in the ROM or the like in advance.

The object detection program executed by the object detection devices 200 and 1200 according to the above embodiments may be provided by being recorded in a computer-readable recording medium such as a CD-ROM, a flexible disk (FD), a CD-R, or a digital versatile disk (DVD) as a file in an installable format or an executable format.

Furthermore, the object detection program executed by the object detection devices 200 and 1200 according to the above embodiments may be stored on a computer connected to a network such as the Internet and provided by being downloaded via the network. The object detection program executed by the object detection devices 200 and 1200 according to the above embodiments may also be provided or distributed via a network such as the Internet.

The object detection program executed by the object detection devices 200 and 1200 according to the above embodiments has a module configuration including the above-described functional units, and as actual hardware, the CPU (processor) reads a control program from the above ROM and executes the control program, so that the above-described functional units are each loaded and generated on the main memory.

Although some embodiments of the present disclosure have been described, these embodiments have been presented by way of example and are not intended to limit the scope of the disclosure. These novel embodiments can be implemented in various other forms, and various omissions, substitutions, and changes can be made without departing from the gist of the disclosure. These embodiments and modifications thereof are included in the scope and gist of the disclosure and are included in the disclosure described in the claims and the scope of equivalents thereof.

## Claims

1. An object detection device (200) mounted on a moving body (1) to detect an object (O) present around the moving body (1), the object detection device (200) comprising:
a plurality of transmission and reception units (21A to 21L) configured to transmit and receive an ultrasonic wave; and
an arithmetic unit (301) configured to calculate an object distance, which is a distance from the moving body (1) to the object (O), on a basis of transmission and reception timings of an ultrasonic wave in each of the plurality of transmission and reception units (21A to 21L), wherein
the arithmetic unit (301) includes:
a triangulation arithmetic unit (314) configured to adopt, as detection data, a distance based on one or more reflected waves with respect to a transmission wave transmitted from any one of the plurality of transmission and reception units (21A to 21L) every time the one or more reflected waves are received, in a case where the reflected wave has predetermined reliability, set detection data of the reflected wave having the reliability as reference detection data, perform triangulation on each of a plurality of pieces of the detection data included in a predetermined range (901) of the reference detection data, and calculate a plurality of coordinates based on the detection data up to the object (O); and
a collision determination unit (316) configured to obtain a moving direction of the object (O) on a basis of the plurality of coordinates obtained every time the transmission wave is transmitted, and determine whether the moving body (1) collides with the object (O) on a basis of the moving direction.

2. The object detection device (200) according to Claim 1, wherein
the collision determination unit (316) calculates a centroid point of the plurality of coordinates, obtains a regression line (1001) representing the moving direction from positions of a plurality of the centroid points each obtained every time the transmission wave is transmitted, and determines that the moving body (1) collides with the object (O) in a case where the regression line (1001) intersects with a position of the moving body (1).

3. The object detection device (200) according to Claim 1, further comprising:
a distance calculation unit (317) configured to calculate the object distance by a first method in a case where it is determined that the moving body (1) does not collide with the object (O), and calculate the object distance by a second method with higher accuracy than the first method in a case where it is determined that the moving body (1) collides with the object (O).

4. The object detection device (1200) according to Claim 1, further comprising
a memory (222), wherein
the arithmetic unit (1301) further includes:
a saving unit (313) configured to save a distance based on one or more reflected waves with respect to a transmission wave transmitted from any one of the plurality of transmission and reception units (21A to 21L) in the memory (222) as detection data every time the one or more reflected waves are received; and
a specification unit (1315) configured to, in a case where a current reflected wave has predetermined reliability, set detection data of the current reflected wave as reference detection data, calculate a trace-back amount on a basis of movement information of the moving body (1) from a time point of reception of a previous reflected wave, and specify detection data of a same object from among a plurality of pieces of the detection data saved in the memory (222) on a basis of the reference detection data and the trace-back amount, and
the triangulation arithmetic unit (1314) further performs the triangulation on the specified detection data with respect to the previous reflected wave and calculates the plurality of previous coordinates.

5. A program to be executed by a computer of an object detection device (200) mounted on a moving body (1) to detect an object (O) present around the moving body (1),
the program causing the computer to execute:
a transmission and reception step of causing a plurality of transmission and reception units (21A to 21L) to transmit and receive an ultrasonic wave; and
an arithmetic step of calculating an object distance, which is a distance from the moving body (1) to the object (O), on a basis of transmission and reception timings of an ultrasonic wave in each of the plurality of transmission and reception units (21A to 21L), wherein
the arithmetic step includes:
a step of adopting, as detection data, a distance based on one or more reflected waves with respect to a transmission wave transmitted from any one of the plurality of transmission and reception units (21A to 21L) every time the one or more reflected waves are received, in a case where the reflected wave has predetermined reliability, setting detection data of the reflected wave having the reliability as reference detection data, performing triangulation on each of a plurality of pieces of the detection data included in a predetermined range (901) of the reference detection data, and calculating a plurality of coordinates based on the detection data up to the object (O); and
a step of obtaining a moving direction of the object (O) on a basis of the plurality of coordinates obtained every time the transmission wave is transmitted, and determining whether the moving body (1) collides with the object (O) on a basis of the moving direction.
